# EUROPÄISCHE PATENTSCHRIFT

(11) **EP 2 006 581 B1**
(45) Veröffentlichungstag und Bekanntmachung des Hinweises auf die Patenterteilung: **15.08.2012**
(21) Anmeldenummer: 08010150.4
(22) Anmeldetag: 04.06.2008
(51) Int. Cl.: F16H 63/48, F16H 61/32

(54) **Kraftfahrzeug umfassend ein elektronisch geschaltetes Automatikgetriebe**
Motor vehicle with an electronically controlled automatic transmission system
Véhicule automobile comprenant une boîte de vitesses à commande électronique

(30) Priorität: 22.06.2007 DE 102007028946
(43) Veröffentlichungstag der Anmeldung: 24.12.2008
(73) Patentinhaber: Audi AG, 85045 Ingolstadt (DE)
(72) Erfinder: Bauer, Martin, 85055 Ingolstadt (DE); Lorenz, Marc, Dr., 85117 Eitensheim (DE)
(74) Vertreter: Thielmann, Frank

(56) Entgegenhaltungen:
- EP-A2- 1 318 336
- EP-A2- 1 462 683
- DE-A1- 10 054 977
- US-A- 5 696 679

## Beschreibung

Die Erfindung betrifft ein Kraftfahrzeug umfassend ein elektronisch geschaltetes Automatikgetriebe mit einer Schaltwelle und einem diese verstellenden Stellmotor.

Bei manchen Kraftfahrzeugen mit Automatikgetriebe erfolgt die Getriebeverstellung in einem shift-by-wire-Verfahren. Der Wählhebel, über den die Fahrstufen (üblicherweise P (= Parkstufe), R (=Rückwärtsfahrstufe), N (=Neutralstufe) und D (= Dauerfahrstufe)) angewählt werden, wird nicht mehr mechanisch mit dem Getriebe gekoppelt, sondern es werden vom Wählhebel elektrische Signale erzeugt, die über eine Leitungsverbindung an eine entsprechende Steuerungseinrichtung gegeben werden, die dann einen Stellmotor ansteuert, der die Getriebeverstellung über eine von ihm bewegte Schaltwelle gemäß der gewünschten Fahrstufe vornimmt. Bei solchen Kraftfahrzeugen ist ferner eine Möglichkeit vorzusehen, die P-Stufe, also die Parkstufe oder Parksperre, automatisch einzulegen, beispielsweise dann, wenn der Fahrer das Fahrzeug in einer anderen Fahrstufe abstellt, mithin also nicht selber aktiv den Wählhebel in die P-Stellung zum Einlegen der Parkstufe bewegt. Aus DE 100 54 977 C2 ist eine Stellvorrichtung für ein gattungsgemäßes Kraftfahrzeug bekannt, bei der der Stellmotor über eine Abtriebsspindel ein Spindelgehäuse linear bewegt, das über eine Kupplung mit einem Schlitten lösbar verbindbar ist, welcher Schlitten seinerseits mit einem an der Schaltwelle befestigten Hebel verbunden ist. Der Schlitten ist gegen eine Rückstellfeder vorgespannt. Solange die Kupplung, dort ein Elektromagnet, geschlossen ist, was dann der Fall ist, wenn Spannung anliegt, mithin also das Fahrzeug in Betrieb ist beziehungsweise die Zündung an ist beziehungsweise die Mindestspannungsversorgung hergestellt ist, kann über den Wählhebel und den Elektromotor jede Fahrstufe angewählt werden. Sobald jedoch die Stromversorgung ausfällt, also beispielsweise im Fall des Abstellen des Fahrzeugs, öffnet sich die Kupplung, die Verbindung zwischen Spindelgehäuse und Schlitten wird gelöst, der Schlitten wird über die Rückstellfeder bewegt, was dazu führt, dass über den Hebel und die Schaltwelle automatisch die P-Fahrstufe eingelegt wird. Dieses System ist jedoch insoweit fehleranfällig, als es bei einem Ausfall der Stromversorgung der Elektromagnet-Kupplung, was im Fehlerfall auch bei laufendem Fahrbetrieb erfolgen kann, zu einem Öffnen der Kupplung und zu einer über die Rückstellfeder erfolgten Bewegung des Schlittens und damit einer Änderung der Getriebestellung kommt, was mitunter gefährlich ist beziehungsweise zu Getriebeschäden führen kann.

Der Erfindung liegt damit das Problem zugrunde, ein Kraftfahrzeug anzugeben, das eine hinreichend sichere automatische Einlegung der P-Fahrstufe, also der Parksperre, ermöglicht.

Zur Lösung dieses Problems ist bei einem Kraftfahrzeug der eingangs genannten Art erfindungsgemäß vorgesehen, dass der Stellmotor über eine lösbare Kupplung mit der über eine Rückstellkraft bei geöffneter Kupplung in eine P-Stellung vorgespannten Schaltwelle gekoppelt ist, wobei zwei über separate Steuereinrichtungen ansteuerbare Mittel zum Öffnen und Schließen der Kupplung vorgesehen sind, wobei die Kupplung nur öffnet, wenn beide Mittel zum Öffnen angesteuert werden.

Bei dem erfindungsgemäßen Kraftfahrzeug sind zum Öffnen und Schließen der Kupplung zwei separate Betätigungsmittel, vorzugsweise in Form elektro-mechanischer Betätigungseinrichtungen, insbesondere in Form von Elektromagneten, vorgesehen. Dabei ist die Ausgestaltung derart, dass die Kupplung nur dann öffnet, wenn beide Mittel zum Öffnen der Kupplung angesteuert werden, das heißt, die Parksperre wird nur dann eingelegt, wenn beide Mittel entsprechend betätigt werden und die Kupplung öffnen. Kommen die bevorzugten Elektromagneten zum Einsatz, so sind diese während des Fahrzeugbetriebs beziehungsweise wenn die Zündung ein ist beziehungsweise eine Mindeststromversorgung gegeben ist, bestromt. Die Kupplung ist geschlossen, die Elektromagneten sind dann zum Schließen der Kupplung angesteuert. Wird das Fahrzeug abgestellt, werden die Elektromagneten also nicht mehr bestromt, so werden beide Elektromagneten simultan und gleichartig zum Öffnen der Kupplung angesteuert. Diese öffnet dann, und die Parksperre wird automatisch eingelegt. Stellt sich während des Betriebes des Kraftfahrzeugs aus irgend welchen Gründen ein Fehler ein, aus dem resultiert, dass einer der Elektromagneten nicht mehr bestromt wird, so hat dies keinen Einfluss auf die Betätigung der Kupplung, diese ist nach wie vor geschlossen, da der andere Elektromagnet nach wie vor bestromt wird. Die Kupplung bleibt geschlossen, es kommt also nicht zu einer automatischen Parkstufeneinlegung.

Bei dem erfindungsgemäßen Kraftfahrzeug ist also eine doppelte Absicherung der Kupplung über die zwei separat ansteuerbaren Mittel, bevorzugt die beschriebenen Elektromagneten, vorgesehen, mithin also ein redundantes Ansteuer- beziehungsweise Sicherheitskonzept, das Fehlerfälle, wie sie im eingangs beschriebenen Stand der Technik auftreten und zu schweren Schäden führen können, ausschließt.

Wie beschrieben sind die Mittel zum Öffnen und Schließen der Kupplung bevorzugt als Elektromagneten ausgeführt, die auf einfache Weise ansteuerbar sind und sehr kurze Ansteuerungs- beziehungsweise Arbeitszeiten haben, so dass mithin auch ein zügiges Einlegen der Parksperre im Bedarfsfall möglich ist. Ein solcher Elektromagnet kann auf einfache mechanische Weise mit der Kupplung verbunden werden beziehungsweise einen Teil derselben darstellen, so dass auch der Aufbau einfach gestaltet werden kann. Denkbar sind z.B. auch piezoelektrische Aktoren oder dergleichen.

Nach einer zweckmäßigen Weiterbildung der Erfindung ist das erste Mittel, insbesondere der erste Elektromagnet, über die Steuerungseinrichtung eines vorzugsweise getriebeaußenseitig angeordneten Aktuators und das zweite Mittel, insbesondere der zweite Elektromagnet, über ein anderes fahrzeugseitig verbautes Steuergerät, insbesondere die Getriebesteuerungseinrichtung ansteuerbar. Wie eingangs beschrieben sind den beiden Betätigungsmitteln, also bevorzugt den beiden Elektromagneten, separate Steuerungseinrichtung zugeordnet. In an sich bekannter Weise wird getriebeaußenseitig ein Aktuator vorgesehen, der die Parksperreneinlegung steuert. Erfindungsgemäß weist dieser eine entsprechende Steuerungseinrichtung auf, die das beschriebene erste Mittel, also den ersten Elektromagneten, ansteuert. Das zweite Mittel, also der zweite Elektromagnet, wird hingegen von einem ohnehin kraftfahrzeugseitig vorgesehenen Steuergerät, insbesondere dem Getriebesteuergerät, angesteuert. Das heißt, der Sicherheitsmechanismus, den der zweite Elektromagnet darstellt, wird über ein ohnehin kraftfahrzeugseitig verbautes Steuergerät realisiert. Der aktuatorseitigen Steuerungseinrichtung ist vorteilhafterweise eine den Steuerbetrieb überwachende Überwachungseinrichtung zugeordnet, über die im Fehlerfall die Steuerungseinrichtung deaktivierbar ist. Über diese Überwachungseinrichtung (watchdog) wird der zeitlich und logisch korrekte Programmablauf in der aktuatorseitigen Steuerungseinrichtung überwacht. Im Fehlerfall, wenn also beispielsweise während des Fahrzeugbetriebs die aktuatorseitige Steuerungseinrichtung aus welchen Gründen auch immer den ersten Elektromagneten nicht mehr bestromt - was aber aufgrund des erfindungsgemäß vorgesehenen redundanten Sicherheitskonzeptes zu keiner Änderung der Kupplungsstellung führt -, kann über die Überwachungseinrichtung die aktuatorseitige Steuerungseinrichtung deaktiviert werden.

In Weiterbildung der Erfindung können wenigstens einem Mittel, insbesondere einem Elektromagneten, zwei im Ansteuerkreis für das Mittel, insbesondere den Elektromagneten angeordnete Schaltelemente zugeordnet sein. Auch hier wird ein redundantes Ansteuerkonzept realisiert. Die aktuatorseitige Steuerungseinrichtung ist also über einen Ansteuerkreis mit zwei separaten Schaltelementen mit dem Elektromagneten verbunden. Sofern der zugeordnete Elektromagnet zum Öffnen der Kupplung abzuschalten, also zu entstromen ist, so ist dies in jedem Fall möglich, selbst wenn aus welchen Gründen auch immer eines der Schaltelemente zum Unterbrechen der Stromzufuhr nicht angesteuert, also geöffnet werden kann. Denn in diesem Fall kann das andere Schaltelement zum Unterbrechen der Stromversorgung geöffnet werden.

Ein weiteres Problem bei Einrichtungen zum automatischen Parksperreneinlegen unter Verwendung eines elektromechanischen Stell- oder Kupplungselements, hier also des Elektromagneten, ist, dass es während des Betriebs des Fahrzeugs mitunter zu Spannungsschwankungen im Bordnetz, mithin also auch zu Bestromungsschwankungen des Elektromagneten kommen kann, die, nachdem ein Elektromagnet relativ schnell auf eine Bestromungsänderung reagiert, dazu führen können, dass es zu einem Öffnen der Kupplung kommt. Um dies zu verhindern, ist nach einer besonders vorteilhaften Weiterbildung der Erfindung vorgesehen, dass die Kupplung gegen wenigstens ein Dämpfungselement zu öffnen ist. Dieses Dämpfungselement bewirkt, dass das Öffnen der Kupplung verlangsamt erfolgt, das heißt, dass die Kupplung also quasi zeitverzögert öffnet. Über diese Verzögerung können Spannungsschwankungen, die z.B. im Bereich weniger 100 ms bis 1-2 s liegen können, kompensiert werden, das heißt, die Kupplung öffnet noch nicht in einer Weise, die eine automatische Parksperreneinlegung über die Rückstellfeder ermöglicht. Der Elektromagnet wird unmittelbar danach wieder voll bestromt, in der Zwischenzeit bleibt vorteilhaft infolge der Dämpfung die Kupplung nach wie vor geschlossen. Ein solches Dämpfungselement kann ein mechanisches Dämpfungselement (z.B. eine Feder), ein hydraulisch oder pneumatisch arbeitendes Dämpfungselement (z.B. ein Hydraulik- oder Pneumatikzylinder) oder ein das Öffnen der Kupplung elektrisch verzögerndes Dämpfungselement, vorzugsweise ein Kondensator, der den Spannungsabfall verzögert, sein. Denkbar ist aber auch, mehrere solcher Dämpfungselemente vorzusehen und zu koppeln.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen Kraftfahrzeugs, und
- Fig. 2: eine Prinzipdarstellung der wesentlichen Komponenten der automatischen Parksperreneinlegevorrichtung.

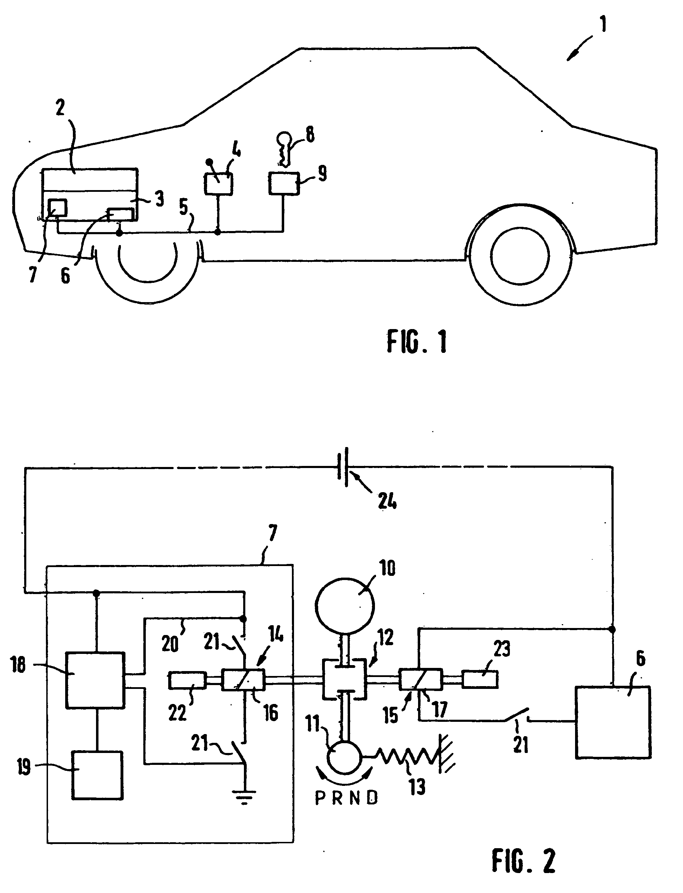

Fig. 1 zeigt ein erfindungsgemäßes Kraftfahrzeug 1, umfassend einen Motor 2 und ein Getriebe 3, das über einen im Fahrzeug befindlichen Wählhebel 4 in einem shift-by-wire-Verfahren geschaltet werden kann. Hierzu erzeugt der Wählhebel 4 über ein geeignetes Steuergerät elektrische Schaltsignale, die über eine Leitungsverbindung 5 an ein Getriebesteuergerät 6 gegeben werden, das in geeigneter Weise einen Stellmotor ansteuert, über den eine Schaltwelle zum Einlegen der gewünschten Fahrstufe bewegt wird. Vorgesehen ist ferner ein getriebeaußenseitig angeordneter Aktuator 7, der dann, wenn bei Vorliegen bestimmter Randbedingungen automatisch eine Parksperre eingelegt werden muss, wenn dies der Fahrer selbst nicht getan hat, den Stellmotor ansteuert, um das Getriebe in die Parkstellung zu bringen. Dies ist beispielsweise dann der Fall, wenn das Fahrzeug abgestellt wird, mithin also der Zündschlüssel 8 aus dem Zündschloss 9 gezogen wird, was entsprechend an das Getriebesteuergerät 6 kommuniziert wird, sofern dort nicht bereits die Information vorliegt, dass die Parkstufe P eingelegt wurde, so erfolgt dies über den Aktuator 7, der ebenfalls das entsprechende Signal vom Zündschloss 6 erhält.

Fig. 2 zeigt in einer Prinzipdarstellung die erfindungsgemäße Einrichtung zum automatischen Einlegen der Parksperre. Dargestellt ist der Stellmotor 10, der mit der Schaltwelle 11 des Getriebes 3 bewegungsgekoppelt ist. Die Schaltwelle 11 ist, wie durch den Doppelpfeil dargestellt, in verschiedene Stellungen, die verschiedenen Fahrstufen (hier P, R, N, D) zugeordnet sind, bewegbar. Die Bewegungskopplung zwischen Stellmotor 10 und der Schaltwelle 11 ist über eine Kupplung 12 realisiert, die geöffnet und geschlossen werden kann. Bei geschlossener Kupplung ist eine Wirkverbindung zwischen Stellmotor 10 und Schaltwelle 11 gegeben, das heißt, diese kann über den Stellmotor 10 verstellt werden. Bei geöffneter Kupplung hingegen ist keine Wellenbewegung über den Stellmotor 10 möglich. Vielmehr wird bei geöffneter Kupplung 12 die Schaltwelle 11 automatisch in eine der P-Fahrstufe entsprechende Position gebracht. Dies geschieht über eine Rückstellfeder 13, die die Schaltwelle 11 derart vorspannt, dass die Schaltwelle 11 bei geöffneter Kupplung 12 automatisch in die P-Position bewegt wird.

Zum Öffnen der Kupplung 12 sind zwei separat ansteuerbare Mittel 14, 15 vorgesehen, bei denen es sich jeweils z.B. um Elektromagnete 16, 17 handelt. Der Elektromagnet 16 ist Teil des Aktuators 7. Der Aktuator 7 weist eine Steuerungseinrichtung 18 auf, der eine Überwachungseinrichtung 19 zugeordnet ist, die den korrekten Ablauf des Steuerprogramms in der Steuerungseinrichtung 18, einem Mikroprozessor, überwacht und im Bedarfsfall eingreifen kann, also die Steuerungseinrichtung 18 deaktivieren kann. Die Steuerungseinrichtung 18 dient zum Ansteuern des Elektromagneten 16, hierüber wird also die Bestromung des Elektromagneten 16 und damit das Schließen oder Öffnen der Kupplung gesteuert. Im Ansteuerschaltkreis 20, über den die Steuerungseinrichtung 18 und der Elektromagnet 16 gekoppelt sind, befinden sich zwei Schaltelemente 21. Die Bestromung erfolgt, wenn die Schaltelemente beide geschlossen sind. Im bestromten Zustand ist der Elektromagnet 16 und damit die Kupplung 12 geschlossen. Soll die Kupplung geöffnet werden, so ist die Stromzufuhr zum Elektromagneten 16 zu unterbrechen, was durch Öffnen des einen oder anderen Schaltelements 21 erfolgen kann. Sollte aus irgend welchen Gründen das eine Schaltelement 21 nicht geöffnet werden können, sei es aufgrund eines Defekts oder dergleichen, so ist immer noch das andere Schaltelement zu öffnen, so dass in jedem Fall die Stromzufuhr zum Elektromagneten 16 unterbrochen und die Kupplung 12 geöffnet werden kann, um automatisch die Parksperre einzulegen.

Des Weiteren wirkt wie beschrieben die Kupplung 12 mit dem Elektromagneten 17 zusammen, der über das Getriebesteuergerät 6 angesteuert, also bestromt wird. Das heißt, hier übernimmt das ohnehin getriebeseitig vorgesehne Getriebesteuergerät 6 die Steuerung des Elektromagneten 17 zum Öffnen und Schließen der Kupplung 12. Wird auch hier die Stromzufuhr über ein entsprechendes Schaltelement 21 unterbrochen, so wird auch hier der Elektromagnet 17 entregt, so dass es grundsätzlich zum Öffnen der Kupplung 12 kommen kann.

Die Ausgestaltung ist nun derart, dass die Kupplung 12 nur dann öffnet, wenn beide Elektromagneten 16, 17 über die jeweils zugeordneten Steuergeräte 18, 6 zum Öffnen angesteuert werden, das heißt, wenn die Stromzufuhr zu beiden Elektromagneten 16, 17 unterbrochen wird. Dies geschieht beispielsweise dann, wenn der Zündschlüssel 8 aus dem Zündschloss 9 gezogen wird, da dann das gesamte fahrzeugseitige System spannungs- beziehungsweise stromlos ist und das automatische Einlegen der Parksperre, also das automatisch über die Rückstellfeder 13 initiierte Zurückstellen der Schaltwelle 11 in die P-Stellung, zweckmäßig ist, um das Fahrzeug gegen unbeabsichtigtes Wegrollen zu sperren. Auch die Grundversorgung über die Batterie 24 ist dann nicht mehr gegeben. Ist nur einer der Elektromagneten 16, 17 stromlos, was aus irgend welchen Gründen in einem Fehlerfall gegeben sein kann (z.B. ist der Aktuator 7 defekt) so ist die Kupplung nach wie vor geschlossen, nachdem der Elektromagnet 17 immer noch bestromt wird. Die Kupplung 12 in Verbindung mit den Elektromagneten 16, 17 ist also derart ausgelegt, dass sie nur dann öffnet, wenn beide Elektromagneten 17 stromlos sind. Ist nur einer stromlos, so bleibt sie aus Sicherheitsgründen geschlossen, um etwaigen Fehlerfällen vorzubeugen.

Weiterhin sind den Elektromagneten 16, 17 Dämpfungselemente 22, 23 zugeordnet, über die die Öffnungsbewegung der Kupplung 12 bei entstromten Elektromagneten 16, 17 gedämpft, also verlangsamt wird. Bei den Dämpfungselementen 22, 23 kann es sich beispielsweise um mechanische Dämpfer handeln, beispielsweise Dämpfungsfedern oder dergleichen, hydraulische oder pneumatische Dämpfungselemente sind denkbar. Denkbar wäre aber auch der Einsatz elektrischer Dämpfungselemente wie Kondensatoren oder dergleichen, die den Spannungsabfall verzögern. Hierdurch können etwaige Spannungsschwankungen in der Versorgungsspannung des Elektromagneten kompensiert werden. Etwaige Spannungsschwankungen können unter Umständen dazu führen, dass der sehr schnell reagierende Elektromagnet stromlos gesetzt wird, was dazu führen würde, dass er sofort öffnen würde beziehungsweise, nachdem die Versorgungsspannung (üblicherweise die Bordnetzspannung) beide Elektromagneten 16, 17 versorgt, dass beide Elektromagneten 16, 17 öffnen. Dies würde zum Öffnen der Kupplung 12 und zum automatischen Einlegen der Parksperre führen, was aber, nachdem das Fahrzeug möglicherweise in Betrieb ist und fährt, in jedem Fall verhindert werden muss. Dies kann über die Dämpfungseinrichtung realisiert werden. Denn die Spannungsschwankungen sind sehr kurz, sie liegen im Bereich weniger 100 ms bis in den Bereich weniger Sekunden. Die Dämpfung ist nun so eingestellt, dass diese kurzzeitige Spannungsschwankung in keinem Fall ausreicht, um die Kupplung 12 zu öffnen. Denkbar wäre es auch, den Steuergeräten 18 und 6 ein Informationssignal über die Höhe der angelegten Spannung zu geben. Diese können nun derart ausgestaltet sein, dass sie den jeweiligen Elektromagneten 16, 17 nur dann stromlos schalten, wenn die gegebene Spannung einen bestimmten Mindestwert unterschreitet, da nur dann davon auszugehen ist, dass das Fahrzeug wirklich abgestellt werden soll.

## Patentansprüche

1. Kraftfahrzeug umfassend ein elektronisch geschaltetes Automatikgetriebe mit einer Schaltwelle und einem diese verstellenden Stellmotor, wobei
der Stellmotor (10) über eine lösbare Kupplung (12) direkt oder indirekt mit der über eine Rückstellkraft (13) bei geöffneter Kupplung (12) in eine P-Stellung vorgespannten Schaltwelle (11) gekoppelt ist,
**dadurch gekennzeichnet,**
**daß** zwei über separate Steuereinrichtungen (6, 18) ansteuerbare Mittel (14, 15) zum Öffnen und Schließen der Kupplung (12) vorgesehen sind, wobei die Kupplung (12) nur öffnet, wenn beide Mittel (14, 15) zum Öffnen angesteuert werden.

2. Kraftfahrzeug nach Anspruch 1,
**dadurch gekennzeichnet,**
**dass** die Mittel (14, 15) elektro-mechanische Betätigungseinrichtungen, insbesondere Elektromagneten (16, 17), sind.

3. Kraftfahrzeug nach einem der vorangehenden Ansprüche,
**dadurch gekennzeichnet,**
**dass** das erste Mittel (14), insbesondere der Elektromagnet (16), über die Steuerungseinrichtung (18) eines vorzugsweise getriebeaußenseitig angeordneten Aktuators (7) und das zweite Mittel (15), insbesondere der Elektromagnet (17), über eine andere fahrzeugseitig verbaute Steuerungseinrichtung, insbesondere die Getriebesteuerungseinrichtung (6), ansteuerbar sind.

4. Kraftfahrzeug nach Anspruch 3,
**dadurch gekennzeichnet,**
**dass** der aktuatorseitigen Steuerungseinrichtung (18) eine den Steuerbetrieb überwachende Überwachungseinrichtung (19) zugeordnet ist, über die im fehlerfall die Steuerungseinrichtung (18) deaktivierbar ist.

5. Kraftfahrzeug nach einem der vorangehenden Ansprüche,
**dadurch gekennzeichnet,**
**dass** wenigstens einem Mittel (14, 15), insbesondere einem Elektromagneten (16, 17), zwei im Ansteuerkreis (20) für das Mittel (14), insbesondere den Elektromagneten (16), angeordnete Schaltetemente (21) zugeordnet sind.

6. Kraftfahrzeug nach einem der vorangehenden Ansprüche,
**dadurch gekennzeichnet,**
**dass** die Kupplung (12) gegen wenigstens ein Dämpfungselement (22, 23) zu öffnen ist.

7. Kraftfahrzeug nach Anspruch 6,
**dadurch gekennzeichnet,**
**dass** das Dämpfungselement (22, 23) ein mechanisches, hydraulisch oder pneumatisch arbeitendes Bewegungsdämpfungselement oder ein das Öffnen der Kupplung (12) elektrisch verzögerndes Dämpfungselement ist.

## Claims

1. Motor vehicle comprising an electronically switched automatic transmission having a selector shaft and a servomotor adjusting said shaft, the servomotor (10) being coupled directly or indirectly via a releasable coupling (12) to the selector shaft (11), which is biased into a P position via a restoring force (13) when the coupling (12) is open, **characterised in that** two means (14, 15), which can be activated via separate control devices (6, 18), are provided for opening and closing the coupling (12), the coupling (12) opening only when the two means (14, 15) are activated for opening.

2. Motor vehicle according to claim 1, **characterised in that** the means (14, 15) are electromechanical actuating devices, in particular electromagnets (16, 17).

3. Motor vehicle according to either of the preceding claims, **characterised in that** the first means (14), in particular the electromagnet (16), can be activated via the control device (18) of an actuator (7) which is preferably arranged outside the gearbox, and the second means (15), in particular the electromagnet (17), can be activated via another control device, in particular the gearbox control device (6), which is installed on the vehicle side.

4. Motor vehicle according to claim 3, **characterised in that** a monitoring device (19) which monitors the control operation is assigned to the actuator-side control device (18), via which monitoring device the control device (18) can be deactivated in the event of a fault.

5. Motor vehicle according to any of the preceding claims, **characterised in that** two switching elements (21) arranged in the activation circuit (20) for the means (14), in particular for the electromagnets (16), are assigned to at least one means (14, 15), in particular an electromagnet (16, 17).

6. Motor vehicle according to any of the preceding claims, **characterised in that** the coupling (12) is to be opened against at least one damping element (22, 23).

7. Motor vehicle according to claim 6, **characterised in that** the damping element (22, 23) is a mechanically, hydraulically or pneumatically operating movement damping element or a damping element which electrically delays the opening of the coupling (12).

## Revendications

1. Véhicule automobile comprenant une boîte de vitesses automatique à commutation électronique avec un axe de levier et un moteur de commande ajustant celui-ci, dans lequel le moteur de commande (10) est couplé, via un couplage mobile (12), directement ou indirectement, avec l'axe de levier (11) précontraint en position P via une force de rappel (13) lorsque le couplage (12) est ouvert, **caractérisé en ce qu'**il est prévu deux moyens (14, 15) qui peuvent être commandés par deux dispositifs de commande séparés (6, 18) pour ouvrir et fermer le couplage (12), dans lequel le couplage (12) ne s'ouvre que lorsque les deux moyens (14, 15) sont commandés pour l'ouverture.

2. Véhicule automobile selon la revendication 1,
**caractérisé en ce que**
les moyens (14, 15) sont des dispositifs de commande électromagnétiques, en particulier des électro-aimants (16, 17).

3. Véhicule automobile selon l'une quelconque des revendications précédentes,
**caractérisé en ce que**
le premier moyen (14), en particulier l'électroaimant (16), peut être commandé via le dispositif de commande (18) d'un actionneur (7) de préférence aménagé en dehors de la boîte de vitesses et le second moyen (15), en particulier l'électroaimant (17), peut être commandé via un autre dispositif de commande masqué côté véhicule, en particulier le dispositif de commande (6) de la boîte de vitesses.

4. Véhicule automobile selon la revendication 3,
**caractérisé en ce que**
il est affecté au dispositif de commande côté actionneur (18) un dispositif de contrôle (19) surveillant l'activité de commande, par lequel le dispositif de commande (18) peut être désactivé en cas de panne.

5. Véhicule automobile selon l'une quelconque des revendications précédentes,
**caractérisé en ce que**
il est affecté au moins à un moyen (14, 15), en particulier à un électroaimant (16, 17), deux éléments de commutation (21) aménagés dans le circuit de commande (20) pour le moyen (14), en particulier l'électroaimant (16).

6. Véhicule automobile selon l'une quelconque des revendications précédentes,
**caractérisé en ce que**
le couplage (12) doit être ouvert à l'encontre d'au moins un élément d'amortissement (22, 23).

7. Véhicule automobile selon la revendication 6,
**caractérisé en ce que**
l'élément d'amortissement (22, 23) est un élément d'amortissement de déplacement opérant par voie mécanique, hydraulique ou pneumatique ou un élément d'amortissement retardant électriquement l'ouverture du couplage (12).
